# EUROPÄISCHE PATENTSCHRIFT

(11) **EP 0 819 088 B1**
(45) Veröffentlichungstag und Bekanntmachung des Hinweises auf die Patenterteilung: **09.02.2000**
(21) Anmeldenummer: 96911963.5
(22) Anmeldetag: 29.03.1996
(51) Int. Cl.: B65D 83/76

(54) **KARTUSCHE**
CARTRIDGE
CARTOUCHE

(30) Priorität: 07.04.1995 DE 19513240
(43) Veröffentlichungstag der Anmeldung: 21.01.1998
(73) Patentinhaber: Henkel Kommanditgesellschaft auf Aktien, 40191 Düsseldorf (DE)
(72) Erfinder: LEPSIUS, Tilwin, D-40545 Düsseldorf (DE); KELDERS, Johannes, Hubertus, Jozef, Maria, NL-5151 RL Drunen (NL)
(86) Internationale Anmeldenummer: EP9601382
(87) Internationale Veröffentlichungsnummer: WO9631413

(56) Entgegenhaltungen:
- EP-A- 0 058 989
- EP-A- 0 523 433
- EP-A- 0 524 514
- WO-A-93/16932
- WO-A-95/11842
- GB-A- 694 741
- US-A- 5 016 784

## Beschreibung

Die Erfindung richtet sich auf eine Kartusche zur Aufnahme einer Produktmasse, insbesondere Dichtungsmasse oder Polyurethan, zur Einbringung in Standardpistolen mit einem hülsenförmigen Mantel und einem im Mantel angeordneten, in Längsrichtung des Mantels verschiebbaren Kolben, wobei im Boden des Mantels ein Austritt zur Ausbringung der Produktmasse vorgesehen ist und der Mantel lagenweise aufgebaut ist, wobei wenigstens eine luftdichte und von der Produktmasse chemisch nicht angreifbare Innenlage aus Kunststoff und wenigstens eine, die Innenlage umgebende, formstabile und mit Fasern verstärkte Außenlage, insbesondere aus umweltfreundlich entsorgbarem Material, vorhanden sind.

Solche Kartuschen werden insbesondere im handwerklichen Bereich verwendet. Sie enthalten eine Produktmasse, bei der es sich beispielsweise um Dichtungsmasse oder Polyurethan, welches zum Ausschäumen von Hohlräumen verwendet wird, handeln kann. Eine solche Kartusche wird in eine Standardpistole eingebracht, welche einen Betätigungsmechanismus aufweist, der an dem Kolben der Kartusche angreift. Durch Verschiebung des Kolbens tritt Produktmasse aus der Kartusche durch den Austritt aus. Der Austritt kann unterschiedlichen Querschnitts sein, so daß eine Anpassung an den Verwendungszweck der Produktmasse möglich ist.

Solche Kartuschen weisen bisher einen Mantel auf, der aus Kunststoff hergestellt ist. Nach vollständiger Entleerung der Kartusche wird diese entsorgt. Eine Wiederverwertung der Kartusche ist aus technischen und ökonomischen Gründen nicht zweckmäßig.

Zur Verringerung des Kunststoffabfalls ist bereits die Verwendung eines Schlauchbeutels zur Aufnahme von Produktmasse vorgeschlagen worden. Ein solcher Schlauchbeutel kann jedoch eine starre Kartusche nur in bestimmten Grenzen substituieren. Der Schlauchbeutel kann auch nicht bei den für die Benutzung einer Kartusche vorgesehenen Standardpistolen verwendet werden. Für die Verwendung von Schlauchbeuteln sind spezielle Vollmantelpistolen notwendig.

Eine einen Mantel aus mit einer Metall-/Kunststoff-Schicht beschichtetem Papier aufweisende Kartusche ist aus der EP-A-58989 bekannt. Auch bei dieser Kartusche ist in dem lagenweise aufgebauten Mantel ein in Längsrichtung des Mantels verschiebbarer Kolben angeordnet. Für die Herstellung dieser Kartusche wird ein beschichtetes Papier benötigt.

Eine ebenfalls gattungsgemäße Kartusche ist aus der EP-A-524514 bekannt. Diese bekannte Kartusche besteht aus einem Schichtmaterial, wobei die innere Schicht aus einer kunststoffbeschichteten Folie aus Aluminium und die äußere Schicht aus Kartonmaterial besteht. Hierbei ist die äußere Schicht als eigenständige Außenhülse und die innere Schicht als eigenständige Innenhülse ausgebildet, zwischen welchen lediglich eine kraft- bzw. reibschlüssige Verbindung besteht. Hierbei werden beide Schichten durch Wickeln hergestellt. Zur Herstellung der inneren Schicht wird Kunststofffolie wendelförmig um einen Dorn gewickelt. Anschließend wird durch ebenfalls wendelförmiges Umwickeln mit Papierstreifen die Außenhülse hergestellt.

Aus der GB-A-694,741 ist eine Kartusche mit darin angeordneter Hülse aus flexiblem Folienmaterial bekannt, wobei diese Hülse einerseits am Bodenelement der Kartusche und andererseits am Deckelelement der Kartusche befestigt ist.

Schließlich ist aus der WO-A-93/16932 ein hülsenförmiger Behälter mit darin angeordnetem, ebenfalls relativ zur Hülse verschiebbarem, bodenseitig geschlossenem Innenbeutel aus Folienmaterial bekannt.

Demgegenüber besteht die Aufgabe der vorliegenden Erfindung darin, eine gattungsgemäße Kartusche alternativ herstellbar auszubilden.

Bei einer Kartusche der eingangs bezeichneten Art wird diese Aufgabe gelöst durch eine dünnwandig geblasene oder dünnwandig durch Koextrusion hergestellte Innenlage mit einer Wandstärke von insbesondere 0,3 bis 0,4 mm.

Mit der Erfindung wird die Möglichkeit geschaffen, eine Kartusche herzustellen, die gegenüber üblichen, geblasenen oder durch Koextrusion hergestellten Kartuschen in ihrem Kunststoffanteil deutlich reduziert ist, aber dennoch die notwendige Stabilität aufweist, andererseits aber mit geläufiger Blas- oder Koextrusionstechnik - ohne das Erlernen neuer Herstelltechnologien wie das Schweißen von Folien - herstellbar ist.

Der Mantel der Kartusche ist lagenweise aufgebaut, wobei wenigstens eine luftdichte und von der Produktmasse chemisch nicht angreifbare innere hülsenförmige Lage und wenigstens eine, die innere Lage umgebende, stabile äußere hülsenförmige Lage vorgesehen sind, wobei die äußere Lage mit Fasern verstärkt ist.

Eine solche Kartusche ist in sich stabil, da die innere Lage von einer äußeren stabilen Lage umgeben ist und kann daher für die bekannten Standardpistolen verwendet werden. Der Kunststoffanteil ist reduziert, da es nicht mehr notwendig ist, den Mantel einlagig aus einem Kunststoff mit einer entsprechenden Dicke auszubilden, um eine hinreichende Druckfestigkeit zu erreichen.

Gemäß Weiterbildung der Erfindung kann aber auch vorgesehen sein, daß die Innenlage Bestandteil einer dünnwandig geblasenen oder dünnwandig durch Koextrusion hergestellten Kartusche ist.

Gemäß einer vorteilhaften Weiterbildung wird vorgeschlagen, daß die Fasern miteinander verwoben sind, so daß diese eine sackförmige Umhüllung der inneren Lage bilden. Die äußere Lage kann von der inneren Lage getrennt werden und ist dadurch wiederverwertbar.

Die äußere Lage kann auch, gemäß einem weiteren Gedanken aus Fasern bestehen, die miteinander verfilzt sind.

Weiterhin sieht die Erfindung in Ausgestaltung vor, daß die Fasern Textilfasern sind.

Vorzugsweise bestehen die Fasern und/oder die äußere Lage insgesamt im wesentlichen aus nachwachsendem Rohstoff. Durch diesen Vorschlag wird der Kunststoffanteil an einer Kartusche weiter reduziert. Die äußere Lage kann dadurch nach Entsorung kompostiert werden.

Um eine besonders hohe Stabilität der äußeren Lage und eine hohe Dichtigkeit derselben zu erreichen, wird vorteilhafterweise vorgeschlagen, die äußere Lage mit Aluminiumfolie oder einer Folie aus Aluminiumlegierung zu versehen. Auch Glasfasern kommen zur Verstärkung der Druckfestigkeit in Betracht. Diese Ausführungsformen sind besonders für mehrfach verwendbare äußere Lagen vorteilhaft.

Die innere und die äußere Lage können nämlich gemäß einer weiteren Ausführungsform der Erfindung lösbar miteinander verbunden sein. Die innere Lage bildet dabei eine chemisch resistente Umhüllung für eine Produktmasse, während die äußere Lage für Stabilität und Druckfestigkeit sorgt. Hierdurch wird ein System zur Verfügung gestellt, bei dem die Kartusche wieder befüllbar ist. Eine spezielle Vollmantelpistole ist bei dieser Ausbildungsform nicht notwendig.

Vorteilhafterweise ist der Kolben der Kartusche mit der inneren Lage einteilig ausgebildet. Beim Verschieben des Kolbens innerhalb der äußeren Lage wird diese nach innen gestülpt und zusammengedrückt. Eine solche Ausbildung ist besonders vorteilhaft im Zusammenhang mit wieder befüllbaren Kartuschen. Dabei bilden die innere Lage und der Kolben eine Nachfüllpatrone. Die Nachfüllpatrone wird vorzugsweise durch Blasen aus Kunststoff hergestellt.

Gemäß einer besonderen Weiterbildung der Erfindung wird für einen nicht einstückig mit der inneren Lage verbundenen Kolben vorgeschlagen, diesen aus im wesentlichen nachwachsendem Rohstoff herzustellen und nur die Stirnfläche des Kolbens, die der Produktmasse zugewandt ist, mit einer hydrophoben Beschichtung zu versehen. Bereits hierdurch wird der Kunststoffanteil der Kartusche reduziert. Die hydrophobe Beschichtung stellt sicher, daß die Produktmasse in der Kartusche den Kolben nicht angreift und so zu Undichtigkeiten der Kartusche führt. Vorzugsweise ist auch die Seitenfläche des Kolbens noch zusätzlich mit einer hydrophoben Beschichtung versehen.

Um eine ausreichende Dichtigkeit zwischen dem Kolben und der Wandung der inneren Lage zu gewährleisten wird vorgeschlagen, den Kolben mit umlaufenden Dichtungslippen auszubilden. Die umlaufenden Dichtungslippen sind besonders dann zweckmäßig, wenn die innere Lage aus Kunststoff geblasen ist, da die Rauhigkeit der inneren Wandung der inneren Lage relativ hoch ist. Die Dichtlippen bestehen dann vorzugsweise aus Silicon.

Vorzugsweise weist der Mantel der Kartusche wenigstens ein sich in Längsrichtung des Mantels erstreckendes Sichtfenster auf. Durch dieses Sichtfenster ist der Entleerungsgrad der Kartusche zu ersehen und ggf. auch die Farbe des Inhalts erkennbar.

Weitere Vorteile und Merkmale der Erfindung werden anhand von Ausführungsbeispielen erläutert. Es zeigen:
- Fig. 1: ein erstes Ausführungsbeispiel einer Kartusche im Vollschnitt,
- Fig. 2: ein zweites Ausführungsbeispiel einer Kartusche im Vollschnitt und
- Fig. 3: vergrößert einen Kolben.

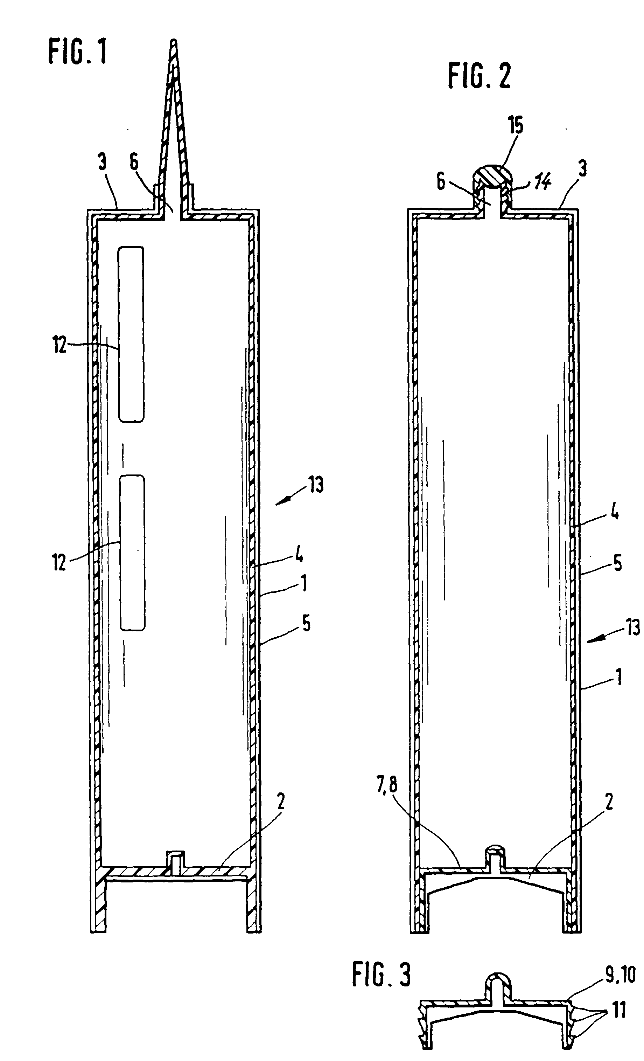

Die Kartusche 13 in den Fig. 1 und 2 weist einen Mantel 1 auf, in dem ein in Längsrichtung des Mantels 1 verschiebbarer Kolben 2 angeordnet ist. Der Mantel 1 weist einen Boden 3 auf. In dem Boden 3 ist ein Austritt 6 ausgebildet, durch den der Inhalt der Kartusche 13 entleerbar ist. Der Austritt 6 kann offen und mit einer Kappe 15 abgedeckt oder verschlossen zum Öffnen mit einem Werkzeug ausgeführt sein.

In Fig. 1 ist der Mantel 1 lagenweise aufgebaut. Er weist eine äußere hülsenförmige Lage 5, die eine innere hülsenförmige Lage 4 umgibt, auf. Die äußere Lage 5 besteht bevorzugt aus einem nachwachsenden Rohstoff. Die innere Lage ist dünnwandig, durch Blasen oder durch koextrusion hergestellt. Der Kolben 2 bildet dabei gleichzeitig die Deckelplatte der inneren Lage 4. Bei einer Verschiebung des Kolbens 2 zum Austritt 6 hin wird die innere Lage 4 von dem Kolben 2 mitgezogen, so daß diese sich nach innen stülpt und dabei sukzessive verkürzt. Bei dieser Ausführungsform wird eine zusätzliche Abdichtung des Kolbens nicht benötigt.

In dem Mantel 1 sind, wie in Fig. 1 dargestellt, zwei Sichtfenster 12 ausgebildet, um den Entleerungszustand der Kartusche erkennbar zu machen. Bei einer dünnwandigen geblasenen oder durch Koextrusion hergestellten inneren Lage 4 aus Polyethylen hoher Dichte (HDPE) ist diese transparent, so daß die Produktmasse durch die Sichtfenster 12 erkennbar ist.

Die innere Lage 4 kann eine Wanddicke von z. B. 0,3 bis 0,4 mm aufweisen. Zur Erzielung höchster Dichtigkeit können auch geblasene Kartuschen bei Wanddicken von etwa 0,4 mm aus mehreren dünnsten Schichten Kunststoff durch Koextrusion aufgebaut werden.

In den Fig. 2 und 3 ist ein zweites Ausführungsbeispiel einer Kartusche dargestellt. Die Kartusche 13 weist einen Mantel 1 mit einem Boden 3 auf. Der Mantel 1 ist zweilagig ausgebildet. Er weist eine äußere hülsenförmige Lage 5 und eine innere hülsenförmige Lage 4 auf. In dem Mantel 1 ist ein Kolben 2 angeordnet, der zum Austritt 6 im Boden 3 hin längsverschiebbar ist. Der Kolben 2 besteht aus im wesentlichen nachwachsendem Rohstoff. Die der Produktmasse zugewandte Stirnfläche 7 ist mit einer hydrophoben Beschichtung 8 versehen. Auch die Seitenfläche 9 des Kolbens 2 ist mit einer hydrophoben Beschichtung 10 versehen. Der Kolben 2 ist zur Abdichtung gegenüber dem inneren Mantel 4 mit umlaufenden Dichtlippen 11 versehen. Die Dichtlippen 11 sind im Querschnitt sägezahnförmig ausgebildet. Die innere Lage 4 ist mit einem Dom 14 versehen. Der Dom 14 weist vorzugsweise ein Außengewinde auf. Auf dem Dom 14 ist eine Verschlußkappe 15 aufgeschraubt. Nach vollständiger Entleerung der Kartusche kann die innere Lage 4 von der äußeren Lage 5 getrennt werden. Die äußere Lage 5 und der Kolben 2 sind wiederverwertbar.

Durch Aufbau einer Kartusche aus zwei Lagen, von denen die eine die chemische Resistenz und Dichtigkeit und die andere die Formstabilität und Druckfestigkeit gewährleistet, kann ein Beitrag zum Umweltschutz geleistet werden, da zumindest eine der Lagen kompostierbar oder wiederverwendbar ausgeführt werden kann.

## Patentansprüche

1. Kartusche zur Aufnahme einer Produktmasse, insbesondere Dichtungsmasse oder Polyurethan, zur Einbringung in Standardpistolen mit einem hülsenförmigen Mantel (1) und einem im Mantel (1) angeordneten, in Längsrichtung des Mantels (1) verschiebbaren Kolben (2), wobei im Boden (3) des Mantels (1) ein Austritt (6) zur Ausbringung der Produktmasse vorgesehen ist und der Mantel (1) lagenweise aufgebaut ist, wobei wenigstens eine luftdichte und von der Produktmasse chemisch nicht angreifbare Innenlage (4) aus Kunststoff und wenigstens eine, die Innenlage (4) umgebende, formstabile und mit Fasern verstärkte Außenlage (5), insbesondere aus umweltfreundlich entsorgbarem Material, vorhanden sind, gekennzeichnet durch eine dünnwandig geblasene oder dünnwandig durch Koextrusion hergestellte Innenlage (4) mit einer Wandstärke von insbesondere 0,3 - 0,4 mm.

2. Kartusche nach Anspruch 1, dadurch gekennzeichnet, daß die Innenlage (4) Bestandteil einer dünnwandig geblasenen oder dünnwandig durch Koextrusion hergestellten Kartusche ist.

3. Kartusche nach Anspruch 1 oder 2, dadurch gekennzeichnet, daß die Fasern miteinander verwoben sind.

4. Kartusche nach Anspruch 1 oder 2, dadurch gekennzeichnet, daß die Fasern miteinander verfiltzt sind.

5. Kartusche nach einem der vorangehenden Ansprüche, dadurch gekennzeichnet, daß die Fasern Textilfasern sind.

6. Kartusche nach einem der vorangehenden Ansprüche, dadurch gekennzeichnet, daß die Fasern im wesentlichen aus nachwachsendem Rohstoff bestehen.

7. Kartusche nach einem der Ansprüche 1 bis 4, dadurch gekennzeichnet, daß die Fasern Glasfasern sind.

8. Kartusche nach einem der vorangehenden Ansprüche, dadurch gekennzeichnet, daß die Außenlage (5) eine Aluminiumfolie oder Folie aus einer Aluminiumlegierung enthält.

9. Kartusche nach einem der Ansprüche 1 bis 7, dadurch gekennzeichnet, daß die Außenlage (5) insgesamt hauptsächlich aus nachwachsendem Rohstoff besteht.

10. Kartusche nach einem der Ansprüche 1 bis 9, dadurch gekennzeichnet, daß die Innen- und die Außenlage (4, 5) lösbar miteinander verbunden sind, so daß insbesondere die Außenlage (5) wiederverwendbar ist und mit einer neuen gefüllten Innenlage (4) versehen werden kann.

11. Kartusche nach einem der Ansprüche 1 bis 9, dadurch gekennzeichnet, daß die Innen- und die Außenlage (4, 5) fest miteinander verbunden sind.

12. Kartusche nach einem der Ansprüche 1 bis 10, dadurch gekennzeichnet, daß der Kolben (2) einteilig mit der Innenlage (4) ausgebildet ist.

13. Kartusche nach Anspruch 12, dadruch gekennzeichnet, daß die Innenlage (4) mit dem Kolben (2) aus Kunststoff hergestellt, vorzugsweise geblasen, ist.

14. Kartusche nach einem der Ansprüche 1 bis 11, dadurch gekennzeichnet, daß der Kolben (2) aus im wesentlichen nachwachsendem Rohstoff besteht und an der der Produktmasse zugewandten Stirnfläche (7) mit einer hydrophoben Beschichtung (8) versehen ist.

15. Kartusche nach Anspruch 14, dadurch gekennzeichnet, daß die Seitenfläche (9) des Kolbens (2) mit einer hydrophoben Beschichtung (10) versehen ist.

16. Kartusche nach einem der Ansprüche 1 bis 11, 14 oder 15, dadurch gekennzeichnet, daß der Kolben (2) umlaufende Dichtlippen (11) aufweist.

17. Kartusche nach Anspruch 16, dadurch gekennzeichnet, daß die Dichtlippen (11) aus Silicon bestehen.

18. Kartusche nach einem der vorangehenden Ansprüche, dadurch gekennzeichnet, daß der Mantel (1) wenigstens ein sich in Längsrichtung des Mantels (1) erstreckendes Sichtfenster (12) aufweist.

19. Kartusche nach einem der vorangehenden Ansprüche, dadurch gekennzeichnet, daß die Innenlage aus mehrschichtigem, insbesondere koextrudiertem, Kunststoff besteht.

## Claims

1. A cartridge for accommodating a product, more particularly sealing compound or polyurethane, for introduction into standard guns comprising a tubular casing (1) and a piston (2) arranged in and designed for displacement longitudinally of the casing (1), an outlet (6) for discharging the product being provided in the base (3) of the casing (1) and the casing (1) being made in layers, at least one air-tight inner layer (4) of plastic chemically resistant to the product and at least one dimensionally stable fibre-reinforced outer layer (5), preferably of an ecologically safe disposable material, surrounding the inner layer (4) being present, characterized by a thin-walled blown or co-extruded inner layer (4) with a thickness of, more particularly, 0.3-0.4 mm.

2. A cartridge as claimed in claim 1, characterized in that the inner layer (4) is part of a thin-walled blown or co-extruded cartridge.

3. A cartridge as claimed in claim 1 or 2, characterized in that the fibers are interwoven.

4. A cartridge as claimed in claim 1 or 2, characterized in that the fibers are matted together.

5. A cartridge as claimed in any of the preceding claims, characterized in that the fibers are textile fibers.

6. A cartridge as claimed in any of the preceding claims, characterized in that the fibers essentially consist of renewable raw material.

7. A cartridge as claimed in any of claims 2 to 4, characterized in that the fibers are glass fibers.

8. A cartridge as claimed in any of the preceding claims, characterized in that the outer layer (5) contains an aluminium foil or a foil of an aluminium alloy.

9. A cartridge as claimed in any of claims 1 to 7, characterized in that the outer layer (5) as a whole consists mainly of renewable raw material.

10. A cartridge as claimed in any of claims 1 to 9, characterized in that the inner and outer layers (4,5) are releasably joined to one another so that the outer layer (5) in particular is re-usable and can be provided with a new filled inner layer (4).

11. A cartridge as claimed in any of claims 1 to 9, characterized in that the inner and outer layers (4,5) are joined firmly to one another.

12. A cartridge as claimed in any of claims 1 to 10, characterized in that the piston (2) is integral with the inner layer (4).

13. A cartridge as claimed in claim 12, characterized in that the inner layer (4) with the piston (2) is made - preferably by blowing - from plastic.

14. A cartridge as claimed in any of claims 1 to 11, characterized in that the piston (2) consists of substantially renewable raw material and is provided with a hydrophobic coating (8) on its face (7) which faces the product.

15. A cartridge as claimed in claim 14, characterized in that the side (9) of the piston (2) is provided with a hydrophobic coating (10).

16. A cartridge as claimed in any of claims 1 to 11, 14 or 15, characterized in that the piston (2) has encircling sealing lips (11).

17. A cartridge as claimed in claim 16, characterized in that the sealing lips (11) consist of silicone.

18. A cartridge as claimed in any of the preceding claims, characterized in that the casing (1) has at least one inspection window (12) extending longitudinally of the casing (1).

19. A cartridge as claimed in any of the preceding claims, characterized in that the inner layer consists of multilayer, more especially co-extruded, plastic.

## Revendications

1. Cartouche destinée à contenir une masse de produit, en particulier une masse d'étanchéité ou du polyuréthanne, à charger dans des pistolets standard, et comprenant une enveloppe (1) en forme de douille et un piston (2) logé dans l'enveloppe (1) et mobile dans le sens de la longueur de l'enveloppe (1), une sortie (6) étant prévue dans le fond (3) de l'enveloppe (1), en vue de la décharge de la masse de produit, et l'enveloppe (1) étant structurée en plusieurs couches, dont au moins une couche intérieure (4) hermétique et inattaquable chimiquement par la masse de produit, et au moins une couche extérieure (5) indéformable et renforcée par des fibres, entourant la couche intérieure (4), en particulier en matière pouvant être éliminée écologiquement, caractérisée par une couche intérieure (4) à fines parois fabriquée par soufflage ou par co-extrusion, d'une épaisseur de paroi de 0,3-0,4 mm, en particulier.

2. Cartouche selon la revendication 1, caractérisée en ce que la couche intérieure (4) est un élément constitutif d'une cartouche à fines parois fabriquée par soufflage ou par co-extrusion.

3. Cartouche selon la revendication 1 ou 2, caractérisée en ce que les fibres sont réunies par tissage.

4. Cartouche selon la revendication 1 ou 2, caractérisée en ce que les fibres sont enchevêtrées.

5. Cartouche selon l'une des revendications qui précèdent, caractérisée en ce que les fibres sont des fibres textiles.

6. Cartouche selon l'une des revendications qui précèdent, caractérisée en ce que les fibres se composent essentiellement d'une matière première renouvelable.

7. Cartouche selon l'une des revendications 1 à 4, caractérisée en ce que les fibres sont des fibres de verre.

8. Cartouche selon l'une des revendications qui précèdent, caractérisée en ce que la couche extérieure (5) contient une feuille d'aluminium ou d'alliage d'aluminium.

9. Cartouche selon l'une des revendications 1 à 7, caractérisée en ce que la couche extérieure (5) dans son ensemble se compose principalement d'une matière première renouvelable.

10. Cartouche selon l'une des revendications 1 à 9, caractérisée en ce que les couches intérieure et extérieure (4, 5) sont reliées l'une à l'autre en pouvant être séparées, de sorte que la couche extérieure (5), en particulier, est réutilisable et peut être munie d'une nouvelle couche intérieure (4) remplie.

11. Cartouche selon l'une des revendications 1 à 9, caractérisée en ce que les couches intérieure et extérieure (4, 5) sont reliées solidement entre elles.

12. Cartouche selon l'une des revendications 1 à 10, caractérisée en ce que le piston (2) est réalisé d'un seul tenant avec la couche intérieure (4).

13. Cartouche selon la revendication 12, caractérisée en ce que la couche intérieure (4) est fabriquée en matière plastique, de préférence par soufflage, avec le piston (2).

14. Cartouche selon l'une des revendications 1 à 11, caractérisée en ce que le piston (2) se compose d'une matière première essentiellement renouvelable et en ce qu'il est garni d'un revêtement hydrophobe (8) sur la face frontale (7) en contact avec la masse de produit.

15. Cartouche selon la revendication 14, caractérisée en ce que la face latérale (9) du piston (2) est garnie d'un revêtement hydrophobe (10).

16. Cartouche selon l'une des revendications 1 à 11, 14 ou 15, caractérisée en ce que le piston (2) présente des lèvres d'étanchéité périphériques (11).

17. Cartouche selon la revendication 16, caractérisée en ce que les lèvres d'étanchéité (11) sont en silicone.

18. Cartouche selon l'une des revendications qui précèdent, caractérisée en ce que l'enveloppe (1) présente au moins une fente de regard (12) orientée dans le sens de la longueur de l'enveloppe (1).

19. Cartouche selon l'une des revendications qui précèdent, caractérisée en ce que la couche intérieure se compose d'une matière plastique en plusieurs couches, en particulier co-extrudée.
